# FASCICULE DE BREVET EUROPEEN

(11) **EP 0 703 371 B1**
(45) Date de publication et mention de la délivrance du brevet: **11.11.1998**
(21) Numéro de dépôt: 95402102.8
(22) Date de dépôt: 19.09.1995
(51) Int. Cl.: F16B 2/08, B60K 37/04, B60Q 1/40

(54) **Système de fixation d'un ensemble sur une colonne, notamment pour la fixation d'un ensemble de commutation électrique sur une colonne de direction de véhicule automobile**
Vorrichtung zur Befestigung einer Anordnung an einer Säule, insbesondere für die Befestigung einer elektrischen Schaltvorrichtung an einer Kraftfahrzeuglenksäule
Device for fastening an assembly to a column, especially for fixing an electric switching device to a steering column of a motor vehicle

(30) Priorité: 20.09.1994 FR 9411173
(43) Date de publication de la demande: 27.03.1996
(73) Titulaire: MAGNETI MARELLI FRANCE, 92000 Nanterre (FR)
(72) Inventeur: Gauthier, Christian, F-92200 Neuilly sur Seine (FR)
(74) Mandataire: Texier, Christian

(56) Documents cités:
- EP-A- 0 082 997
- EP-A- 0 152 311
- FR-A- 2 699 468
- US-A- 2 679 993

## Description

La présente invention concerne le domaine des systèmes de fixation d'un ensemble sur une colonne (voir par exemple US-A-2 679 993).

La présente invention s'applique en particulier à la fixation d'un ensemble de commutation/commande d'équipements électriques, sur une colonne de direction de véhicule automobile.

Différentes solutions ont déjà été proposées à cet effet.

La technique la plus classique pour fixer une platine de commutateur électrique sur une colonne de direction de véhicule automobile consiste à serrer sur la colonne, à l'aide d'un collier classique, un fût fendu axialement venu de moulage avec la platine du commutateur.

On a également proposé, comme décrit dans le document EP-A-152311, un système de fixation comprenant une platine liée à l'ensemble formant commutateur et munie d'un collier qui entoure la colonne, et une clavette de serrage en coin.

On a également proposé comme décrit dans le document FR-A-2 710 882 un système de fixation comprenant un collier ouvert pourvu de deux pattes en saillie radialement vers l'extérieur et une pièce de commande apte à opérer le resserrement de ces deux pattes.

La présente invention a maintenant pour but de perfectionner les systèmes de fixation antérieurs connus.

Ce but est atteint selon la présente invention grâce à un système de fixation d'un ensemble sur une colonne, comprenant un collier adapté pour entourer la colonne, une structure liée à l'ensemble, placée à l'intérieur du collier et qui entoure au moins partiellement la colonne et un coin conçu pour être placé entre le collier et ladite structure, et ainsi déplacer le collier radialement par rapport à l'axe de la colonne pour serrer le collier et l'ensemble par rapport à la colonne lorsque le coin est déplacé dans une direction générale parallèle à l'axe de la colonne.

Selon une autre caractéristique avantageuse de la présente invention, les faces du coin reposant respectivement sur le collier et sur ladite structure de l'ensemble sont symétriques de sorte que ces faces peuvent être inversées.

Selon une autre caractéristique avantageuse de l'invention, la structure liée à l'ensemble définit un guide à translation pour le coin.

Selon une autre caractéristique avantageuse de la présente invention, la structure liée à l'ensemble définit une rampe inclinée par rapport à l'axe de la colonne pour solliciter le coin.

Selon une autre caractéristique avantageuse de la présente invention, le coin comprend au moins une facette d'appui sur la rampe, inclinée par rapport à l'axe de la colonne.

Selon une autre caractéristique avantageuse de la présente invention, le coin définit au moins une facette d'appui pour le collier, qui s'étend dans une direction générale parallèle à l'axe de la colonne.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue axiale de dessus d'un système conforme à la présente invention,
- la figure 2 représente une vue en coupe longitudinale du même système selon le plan de coupe référencé II-II sur la figure 1,
- la figure 3 représente une vue latérale d'un coin conforme à la présente invention,
- la figure 4 représente une vue de dessus du même coin,
- la figure 5 représente une vue de dessous du même coin,
- la figure 6 représente une vue en coupe longitudinale du même coin, selon le plan de coupe référencé VI-VI sur la figure 4,
- la figure 7 représente une seconde vue latérale du coin, orthogonale à la figure 3, et
- la figure 8 représente une vue partielle en coupe transversale du coin, selon le plan de coupe référencé VIII sur la figure 2.

Sur les figures annexées, la colonne, constituée de préférence d'une colonne de direction de véhicule automobile, est référencée 100 et illustrée en traits mixtes interrompus, tandis que l'ensemble destiné à être fixé sur cette colonne 100, et qui sert de préférence de platine support à au moins un commutateur électrique sous volant, est référencé 200.

Le système de fixation conforme à la présente invention représenté sur les figures annexées, comprend quant à lui, pour l'essentiel, un collier 300, un coin 400 et une vis de commande 500.

La colonne de direction 100 peut faire l'objet de nombreuses variantes connues en elles-mêmes. La colonne 100 ne sera pas décrite dans le détail par la suite.

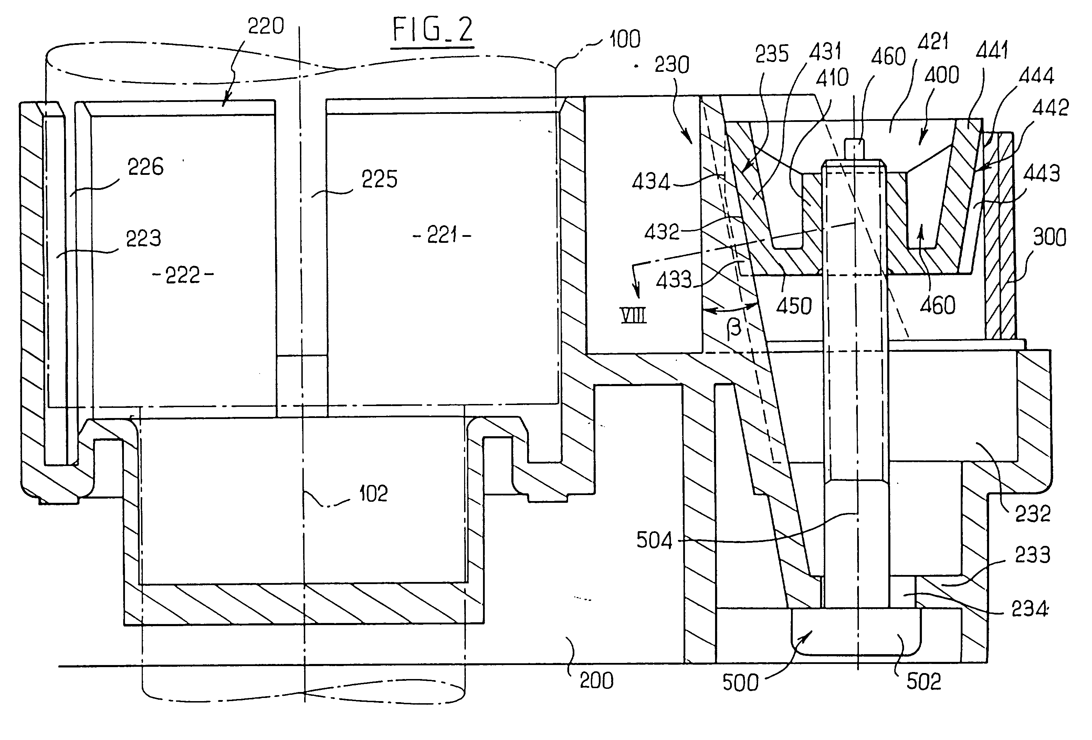

Comme on l'a schématisé sur la figure 2, la colonne 100 peut être par exemple étagée sur sa longueur.

De même, l'ensemble 200 peut faire l'objet de nombreuses variantes de réalisation. De préférence, il est réalisé par moulage en matière plastique.

L'ensemble 200 comprend avantageusement une platine 210 servant de support à au moins un commutateur électrique, par exemple pour la commande des moyens d'éclairage et des moyens indicateurs lumineux du véhicule, ainsi qu'éventuellement la commande des essuie/ lave vitres et parebrises. La platine 210 peut être adaptée pour porter d'autres fonctions, par exemple un contacteur tournant conçu pour assurer une liaison électrique entre un élément porté par le volant, tel qu'un coussin gonflable de sécurité, mobile à rotation, et des moyens de commande fixes par rapport au chassis.

Pour l'essentiel, la platine 210 est formée d'une plaque qui s'étend dans une direction générale perpendiculaire à l'axe 102 de la colonne 100.

La platine 210 porte un fût 220 fendu axialement et par conséquent au moins partiellement élastique, centré sur l'axe 102. Le fût 220 entoure ainsi au moins partiellement la colonne 100.

Selon le mode de réalisation particulier non limitatif représenté sur les figures annexées, le fût 220 comprend quatre secteurs 221, 222, 223, 224. Le secteur principal 221 est formé d'une calotte cylindrique présentant une ouverture angulaire de l'ordre de 170°. Ce secteur principal 221 est sensiblement rigide.

Les trois autres secteurs, secondaires 222, 223, 224, élastiques, équirépartis en regard du secteur principal 221 couvrent chacun une ouverture angulaire de l'ordre de 50°, par rapport à l'axe 102 de la colonne 100.

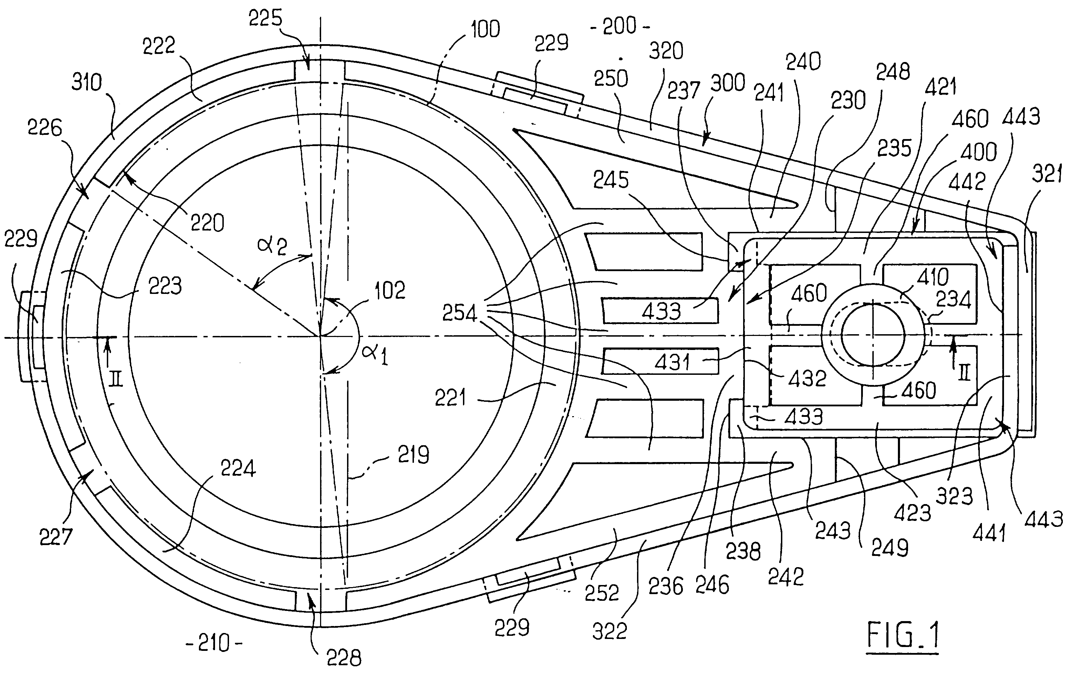

Sur la figure 1 annexée, l'ouverture angulaire du secteur principal rigide 221 est référencée α1, celle des secteurs secondaires élastiques 222, 223, 224 est référencée α2.

Les lumières longitudinales formées entre les différents secteurs, 221, 222, 223 et 224, pour permettre une déformation radiale de celles-ci, sont référencées 225, 226, 227 et 228.

La structure d'appui 230 prévue sur l'ensemble 200 pour solliciter le coin 400 et assurer le serrage du collier 300 est formée radialement sur l'extérieur du secteur principal 221.

Plus précisément, cette structure 230 comprend, au niveau de la platine 210, une chambre inférieure 232 apte à recevoir au moins partiellement le coin 400. La chambre 232 peut servir à positionner et maintenir à l'origine le coin 400.

Comme on le devine à l'examen de la figure 1, la chambre 232 présente une section droite, orthogonale à l'axe 102, généralement rectangulaire, complémentaire de la section correspondante du coin 400.

La chambre 232 est munie dans sa paroi de base 233 d'un perçage traversant 234 qui s'étend parallèlement à l'axe 102 de la colonne. Ce perçage 234 est conçu pour recevoir la tige 504 de la vis de commande 500. Les dimensions du perçage 234 doivent être inférieures à la section de la tête 502 de la vis 500 de sorte que la paroi de base 233 serve d'appui à cette tête 502.

Cependant, de préférence, comme on l'aperçoit à l'examen des figures 1 et 2, le perçage 234 est oblong et a sa grande dimension orientée radialement par rapport à l'axe 102. Cette disposition est prévue pour permettre un léger déplacement radial de la tige 102 sous l'effet du déplacement radial du coin 400, lorsque celui-ci glisse sur une rampe de commande de la structure 230, comme on le décrira par la suite.

Bien entendu la petite dimension du perçage 234 doit être complémentaire du diamètre de la tige 504 de la vis 500.

Pour l'essentiel, la structure 230 comprend une face ou rampe 235 servant d'appui et de sollicitation au coin 400 et deux murets latéraux 240, 242 qui servent de guide à ce dernier.

Les murets 240, 242 sont parallèles entre eux et orthogonaux à la face d'appui 235.

Pour l'essentiel, cette face d'appui et de sollicitation 235 est généralement plane et délimitée par des génératrices perpendiculaires à l'axe 102 de la colonne et parallèles à une corde reliant les extrémités du secteur principal 221, laquelle corde est référencée 219 sur la figure 1.

Cependant, la face d'appui 235 diverge par rapport à l'axe 102 en rapprochement du fond de la chambre 232.

Ainsi, la face d'appui 235 définit une facette généralement plane inclinée par rapport à l'axe 102 d'un angle β de l'ordre de 10 à 15°, avantageusement de l'ordre de 12°.

Plus précisément encore, comme on le voit sur la figure 1 notamment, la face d'appui 235 est formée sur une nervure 236 dont le sommet 235 est formé d'une facette plane inclinée de l'angle β par rapport à l'axe 102, laquelle nervure 236 est encadrée par deux gorges parallèles 237, 238. Les gorges 237, 238 sont ainsi adjacentes respectivement aux murets 240 et 242. Les fonds des gorges 237, 238, référencés respectivement 245, 246 sont parallèles au sommet 235 de la nervure 236.

Les faces intérieures 241, 243 des murets 240, 242 sont planes, parallèles entre elles et parallèles à l'axe 102, tout en étant perpendiculaire à la corde 219 précitée.

La surface extérieure des murets 240, 242 peut quant à elle être sensiblement quelconque. De préférence, cette surface extérieure des murets 240, 242 comprend des toiles 250, 252 qui relient les extrémités radialement externes 248, 249 des murets 240, 242 et le secteur principal 221. De préférence les toiles 250, 252 se raccordent tangentiellement sur le secteur principal 221.

En outre, il est prévu de préférence différentes parois 254, parallèles entre elles et parallèles à l'axe 102, ainsi qu'orthogonales à la corde 219, par exemple cinq parois 254, entre le secteur principal 221 et la paroi formant la rampe 235. Ces parois 254 ainsi que les toiles 250, 252 assurent en combinaison la rigidité du secteur principal 221.

De préférence, les différents secteurs 221, 222, 223, 224 du fût fendu 221, possèdent à proximité de leur sommet et sur leur surface extérieure, des dentures 229 conçues pour assurer le maintien du collier de serrage 300.

Plus précisément, selon le mode de réalisation particulier représenté sur la figure 1, il est ainsi prévu trois dentures 229 : une denture 229 sur le secteur 223, et deux dentures 229 respectivement sur les faces externes des toiles 250 et 252.

Le collier 300 est avantageusement réalisé en métal. Le collier 300 comprend de préférence un secteur globalement cylindrique 310 deux bandes rectilignes 320, 322 et deux retours 321, 323. Le secteur 310 présente par exemple une ouverture angulaire de l'ordre de 180°. Il est conçu pour recouvrir, radialement sur l'extérieur, les secteurs 222, 223 et 224. Les bandes 320, 322 prolongent respectivement les extrémités du secteur 310. Elle sont planes et recouvrent les surfaces extérieures des toiles 250, 252. Ainsi, les bandes 320, 322 convergent, en éloignement de l'axe 102. En outre, chaque bande 320, 322 est munie à son extrémité opposée au secteur 310, d'un retour 321, 323. Ces deux retours 321, 323 sont adjacents, parallèles à l'axe 102 et à la corde 219. Ils recouvrent la partie radialement extérieure de la structure 230.

Le cas échéant, les deux retours 321, 323 adjacents peuvent être reliés rigidement par tout moyen approprié, par exemple à l'aide d'un point de soudure.

On va maintenant décrire la structure du coin 400 représentée sur les figures annexées.

Ce coin 400 est réalisé de préférence en métal.

Il présente deux plans de symétrie.

Le premier plan de symétrie référencé P passe par l'axe 102. Le second plan de symétrie référencé O, orthogonal au plan de symétrie P précité, est parallèle à la corde 219 et parallèle à l'axe 102.

Le coin 400 a la forme générale d'un bloc paraléllépipédique. Plus précisément, le coin 400 est légèrement effilé en forme de pyramide. Il porte un fût taraudé 410 centré sur un axe 412. L'axe 412 correspond à l'intersection des deux plans de symétrie P et O. L'axe 412 est parallèle à l'axe 102.

Le fût taraudé 410 est conçu pour recevoir la tige 504 de la vis de commande 500, comme on le voit sur la figure 2.

Ainsi, le coin 400 est déplacé à translation sensiblement parallèlement à l'axe 102 avec un léger déplacement radiale par rapport à cet axe 102, vers l'extérieur, comme on l'expliquera par la suite, lors de l'entraînement de la vis 500, pour assurer le serrage du collier 300 sur la colonne de direction 100.

Le coin 400 comprend deux faces principales 420, 422, planes et parallèles entre elles. La distance séparant les deux faces principales 420, 422, est sensiblement égale, tout en étant légèrement inférieure, à la distance séparant les surfaces internes 241, 243 des murets 240, 242. Ainsi, le coin 400 est guidé par les murets 240, 242 à translation sensiblement parallèlement à l'axe 102.

Le coin 400 comprend en outre deux faces secondaires 430, 440 génèralement orthogonales aux faces principales 420, 422. Ces faces 430, 440 servent respectivement d'appui sur la rampe 235 de la structure 230 solidaire de l'ensemble 200 d'une part, et sur le collier 300, plus précisément sur la surface interne du retour 323 d'autre part.

Selon une caractéristique importante de l'invention, ces deux faces 430, 440 sont symétriques, par rapport au plan O, de sorte qu'elles peuvent être inversées. Grâce à cette symétrie, l'assemblage du système est largement facilité, puisqu'il n'est pas nécessaire de prendre la moindre précaution quant au positionnement du coin 400 sur la platine 200.

Plus précisément encore, chaque face 430, 440 comprend au moins une facette 432, 442, plane de préférence, inclinée par rapport à l'axe 412. Les facettes 432, 442 convergent entre elles en rapprochement de la base du coin 400. L'inclinaison entre chaque facette 432, 442 et l'axe 412 est de préférence sensiblement égale à l'inclinaison β de la rampe 235 par rapport à l'axe 102.

Ces facettes 432, 442 sont destinées à reposer sur la rampe 235.

En outre chaque face 430, 440 du coin 400 comprend deux nervures 433, 443 qui délimitent des facettes d'appui 434, 444 parallèles à l'axe 412. Ces facettes 434, 444 servent d'appui au collier 300. Les nervures 433, 443 sont respectivement parallèles entre elles et adjacentes aux faces principales 420, 422. Ainsi, les nervures 433, 443 encadrent les facettes d'appui 432, 442.

Plus précisément, les facettes 434, 444 parallèles à l'axe 412 sont formées sur la demi-hauteur supérieure des nervures 433, 443, par le sommet de celles-ci, tronqué à cet effet. Par contre, le sommet des nervures 433, 443, sur la demi-hauteur inférieure de celles-ci, est avantageusement incliné par rapport à l'axe 412, parallèlement aux facettes d'appui 432, 442.

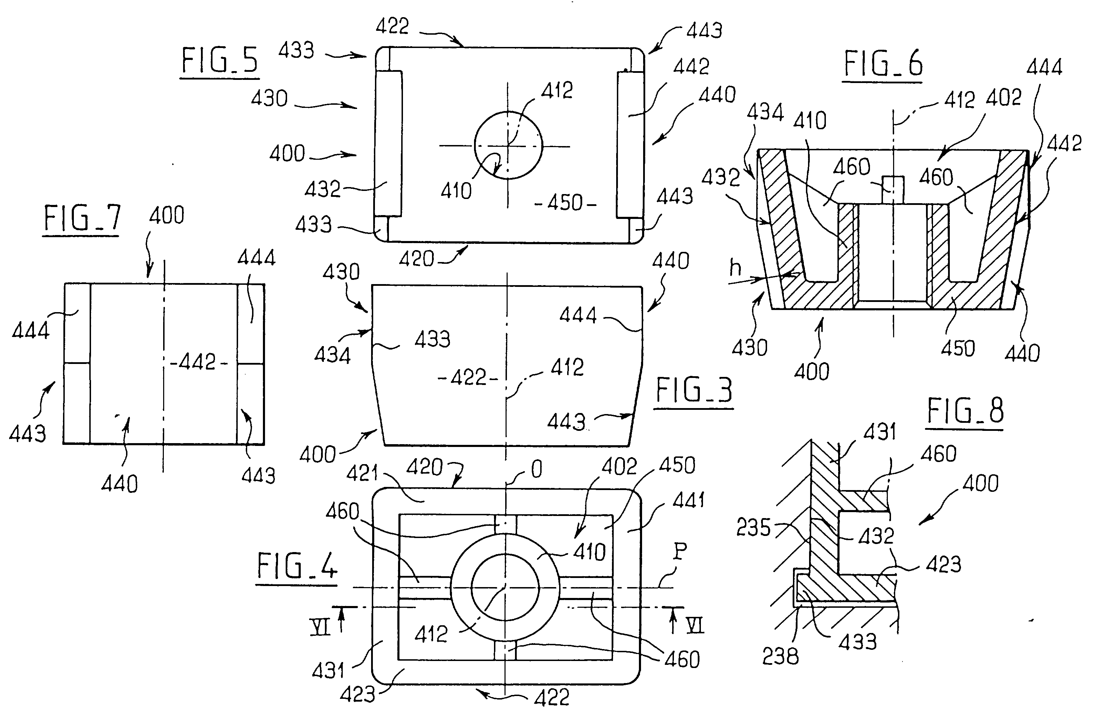

La hauteur h en saillie des nervures 433, 443, par rapport aux facettes d'appui 432, 442 (voir figure 6) est inférieure à la profondeur des gorges 237, 238 prévues sur la structure 230.

Ainsi, lorsque le coin 400 est placé dans la structure 230, et engagé sur la vis 500, l'une des facettes 432, 442 repose sur la rampe 235, les nervures 433 ou 443 qui encadrent cette facette 432, 442 sont placées dans les gorges 237, 238, tandis que le sommet 444 ou 434 des nervures 443 ou 433 prévues sur l'autre face secondaire repose sur la surface intérieure du retour 323 lié au collier de serrage 300. Ainsi, le coin 400 repose sur l'ensemble 200, par l'intermédiaire d'un facette inclinée par rapport à l'axe 102, tandis que le même coin 400 repose contre le collier 300 par l'intermédiaire de facettes 444, 434 parallèles à cet axe 102.

Le coin 400 est immobilisé à rotation sur la structure 230, entre les murets 240, 242. La vis 500 est en prise par le fût taraudé 410 avec le coin 400. La vis 500 est elle-même immobilisée à translation sur la structure 230 puisque sa tête 502 repose contre la paroi de base 233.

Par conséquent l'entraînement de la vis 500 provoque le déplacement à translation du coin 400 dans une direction générale sensiblement parallèle à l'axe 102, en rapprochement de la chambre inférieure 232. Cependant, au cours de cette translation, le coin 400 glisse sur la rampe 235 inclinée par rapport à l'axe 102. Par conséquent, au cours de ce mouvement, le coin 400 est déplacé radialement vers l'extérieur par rapport à l'axe 102.

Grâce à la présence des facettes 434, 444 parallèles à l'axe 102, l'effort exercé par le coin 400 sur le collier 300 est orienté radialement, soit perpendiculairement à l'axe 102. Le collier de serrage 300 est ainsi déplacé radialement par rapport à l'axe 102. De ce fait, il opère sur les secteurs élastiques 222, 223 et 224 un effort de resserrement sur la colonne 100 permettant de fixer la platine 200 sur cette dernière.

Par rapport au système décrit par exemple dans le document antérieur EP-A-152311, les dispositions conformes à la présente invention offrent l'avantage d'éviter toute friction directe entre le coin 400 et la colonne 100, et par conséquent l'invention permet d'éviter tout risque de blocage intempestif du coin 400.

Comme on le voit sur les figures annexées, le coin 400 est par ailleurs formé de préférence d'un corps évidé comprenant une paroi de base 450 percée en regard de l'alésage fileté du fût 410 et qui relie entre elles les parois 421, 423, 431 et 441 formant les faces 420, 422, 430 et 440 précitées. En outre, le coin 400 comprend de préférence, dans sa chambre intérieure 402 au moins une toile assurant la liaison entre la surface externe du fût taraudé 410 et la surface interne des parois précitées 421, 423, 431 et 441 du coin.

Selon le mode de réalisation particulier, il est ainsi prévu quatre toiles de raidissement 460 entre la surface externe du fût 410 et la surface interne des parois 421, 423, 431, 441 délimitant les faces 420, 422, 430 et 440.

Il faut noter par ailleurs que le système conforme à la présente invention autorise un libre réglage angulaire de la platine 200 autour de l'axe 102, sur la colonne 100, avant serrage de la vis 500 et du collier 300.

On peut envisager de former, sur les faces secondaires 430, 440 du coin 400, non point une facette de commande centrale 432, 442 destinée à coopérer avec la rampe 235, encadrée par deux nervures 433, 443 destinées à coopérer avec le collier 300, mais de réaliser ces faces secondaires 430, 440, sous forme d'une nervure centrale similaire aux nervures 434, 444, possédant au moins une facette parallèle à l'axe 102, destinée à coopérer avec le collier 300, encadrée par deux gorges dont le fond délimite une facette inclinée par rapport à l'axe 102, destinée à coopérer avec la rampe 235. Bien entendu, dans ce dernier cas, il est nécessaire d'adapter en conséquence la structure de sollicitation 230, en remplaçant la nervure centrale 235 encadrée par deux gorges 237, 238, par une structure comprenant une gorge centrale similaire aux gorges 237, 238, destinée à recevoir la nervure centrale prévue sur le coin, et encadrée par deux nervures symétriques similaires à la nervure 236, délimitant une facette inclinée par rapport à l'axe 102, pour servir d'appui à la facette homologue du coin 400.

## Revendications

1. Système de fixation d'un ensemble (200) sur une colonne (100), en particulier pour la fixation d'une platine support de commutateur électrique sur une colonne de direction de véhicule automobile, du type comprenant un collier (300) adapté pour entourer la colonne (100), et un coin (400), caractérisé par le fait qu'il comprend une structure (230) liée à l'ensemble (200), placée à l'intérieur du collier (300) et qui entoure au moins partiellement la colonne (100), tandis que le coin (400) est conçu pour être placé entre le collier (300) et la structure (230) et ainsi déplacer le collier radialement par rapport à l'axe (102) de la colonne (100) pour serrer le collier (300) et l'ensemble (200) par rapport à la colonne (100) lorsque le coin (400) est lui-même déplacé dans une direction générale parallèle à l'axe (102) de la colonne (100).

2. Système selon la revendication 1, caractérisé par le fait que les faces (430, 440) du coin (400) reposant sur le collier (300) et sur la structure (230) de l'ensemble sont symétriques, de sorte que ces faces (430, 440) peuvent être inversées.

3. Système selon l'une des revendications 1 ou 2, caractérisé par le fait que la structure (230) liée à l'ensemble (200) définit un guide à translation pour le coin (400).

4. Système selon l'une des revendications 1 à 3, caractérisé par le fait que la structure (230) liée à l'ensemble (200) définit une rampe (235) inclinée par rapport à l'axe (102) de la colonne pour solliciter le coin (400).

5. Système selon l'une des revendications 1 à 4, caractérisé par le fait que le coin (400) définit au moins une facette (432, 442) servant d'appui sur une rampe (235) liée à la structure (230) de l'ensemble (200), qui est inclinée par rapport à l'axe (102) de la colonne.

6. Système selon l'une des revendications 1 à 5, caractérisé par le fait que le coin (400) définit au moins une facette (434, 444) servant d'appui au collier (300), qui est parallèle à l'axe (102) de la colonne (100).

7. Système selon l'une des revendications 1 à 6, caractérisé par le fait que l'ensemble (200) comprend au moins une platine (210) généralement perpendiculaire à l'axe (102) de la colonne (100) et un fût (220) fendu axialement et au moins partiellement élastique.

8. Système selon la revendication 7, caractérisé par le fait que le fût fendu (220) comprend au moins un secteur rigide (221) servant d'appui à la colonne (100) et au moins un secteur élastique (222, 223, 224).

9. Système selon l'une des revendications 1 à 8, caractérisé par le fait que la platine (210) de l'ensemble (200) comprend un perçage (234) conçu pour recevoir la tige d'une vis de commande (500) en prise avec le coin (400).

10. Système selon la revendication 9, caractérisé par le fait que le perçage (234) est oblong, avec sa grande direction orientée radialement par rapport à l'axe (102) de la colonne (100).

11. Système selon l'une des revendications 1 à 10, caractérisé par le fait que la structure (230) prévue sur l'ensemble comprend une face d'appui (235) inclinée par rapport à l'axe (102) de la colonne (100) et encadrée de deux murets latéraux (240, 242).

12. Système selon l'une des revendications 1 à 11, caractérisé par le fait que l'inclinaison (β) de la rampe de sollicitation (235) prévue sur la structure liée à l'ensemble est de l'ordre de 10 à 15°.

13. Système selon l'une des revendications 1 à 12, caractérisé par le fait que la structure (230) prévue sur l'ensemble (200) comprend une nervure centrale (236) inclinée par rapport à l'axe (102) de la colonne, encadrée de deux gorges (237, 238) conçues pour recevoir des nervures (433, 443) prévues sur le coin (400).

14. Système selon l'une des revendications 1 à 12, caractérisé par le fait que la structure (230) prévue sur l'ensemble (200) comprend une gorge centrale conçue pour recevoir une nervure prévue sur le coin (400) et encadrée de deux nervures inclinées par rapport à l'axe (102) de la colonne (100), destinées à servir d'appui au coin (400).

15. Système selon l'une des revendications 1 à 14, caractérisé par le fait que l'ensemble comprend des dentures élastiques (229) conçues pour assurer le maintien du collier (300).

16. Système selon l'une des revendications 1 à 15, caractérisé par le fait que le coin (400) a la forme générale d'une pyramide.

17. Système selon l'une des revendications 1 à 16, caractérisé par le fait que le coin (400) présente deux plans de symétrie (P, O).

18. Système selon l'une des revendications 1 à 17, caractérisé par le fait que le coin (400) comprend un fût central taraudé (410).

19. Système selon l'une des revendications 1 à 18, caractérisé par le fait que le coin (400) comprend deux faces principales planes parallèles (420, 422) qui assurent un blocage à rotation du coin (400).

20. Système selon l'une des revendications 1 à 19, caractérisé par le fait que le coin (400) comprend deux nervures (433, 443), sur des faces opposées (430, 440), lesquelles nervures (433, 443) définissent des facettes d'appui (434, 444), pour le collier (300), parallèles à l'axe (102), et encadrent des facettes (432, 442) inclinées par rapport à cet axe.

21. Système selon l'une des revendications 1 à 19, caractérisé par le fait que le coin (400) possède sur des faces opposées (430, 440), une nervure centrale délimitant une facette d'appui parallèle à l'axe (102), pour le collier (300), encadrée par des gorges dont le fond est incliné par rapport à cet axe (102).

22. Système selon l'une des revendications 20 ou 21, caractérisé par le fait que la hauteur en saillie (h) des nervures (433, 443) est inférieure à la profondeur de gorges correspondantes (237, 238) prévues sur la structure (230) liée à l'ensemble.

## Patentansprüche

1. Anordnung zum Befestigen einer Einrichtung (200) an einer Säule (100) insbesondere zum Befestigen einer Halteplatte eines elektrischen Schalters an der Lenksäule eines Kraftfahrzeuges von einem Typ, der eine Schelle (300), die so ausgebildet ist, daß sie die Säule (100) umgibt, und einen Keil (400) umfaßt, dadurch gekennzeichnet, daß sie eine Konstruktion (230) umfaßt, die mit der Einrichtung (200) verbunden ist, im Inneren der Schelle (300) angeordnet ist und wenigstens teilweise die Säule (100) umgibt, wobei der Keil (400) so ausgebildet ist, daß er zwischen der Schelle (300) und der Konstruktion (230) angeordnet sein kann und daher die Schelle radial bezüglich der Achse (102) der Säule (100) versetzt, um die Schelle (300) und die Einrichtung (200) bezüglich der Säule (100) festzuklemmen, wenn der Keil (400) seinerseits in eine Richtung im wesentlichen parallel zur Achse (102) der Säule (100) versetzt wird.

2. Anordnung nach Anspruch 1, dadurch gekennzeichnet, daß die Außenflächen (430, 440) des Keils (400), die an der Schelle (300) und an der Konstruktion (230) der Einrichtung anliegen, symmetrisch sind, derart, daß diese Flächen (430, 440) entgegengerichtet sind.

3. Anordnung nach Anspruch 1 oder 2, dadurch gekennzeichnet, daß die Konstruktion (230), die mit der Einrichtung (200) verbunden ist, eine Translationsführung für den Keil (400) bildet.

4. Anordnung nach einem der Ansprüche 1 bis 3, dadurch gekennzeichnet, daß die Konstruktion (230), die mit der Einrichtung (200) verbunden ist, eine Schrägfläche (235) bildet, die bezüglich der Achse (102) der Säule geneigt ist, um den Keil (400) festzuziehen.

5. Anordnung nach einem der Ansprüche 1 bis 4, dadurch gekennzeichnet, daß der Keil (400) wenigstens eine Facette bildet, die dazu dient, zur Anlage an einer Schrägfläche (235) zu kommen, die mit der Konstruktion (230) der Einrichtung (200) verbunden ist, und die bezüglich der Achse (102) der Säule schräg verläuft.

6. Anordnung nach einem der Ansprüche 1 bis 5, dadurch gekennzeichnet, daß der Keil (400) wenigstens eine Facette (434, 444) bildet, die dazu dient, zur Anlage an der Schelle (300) zu kommen, und parallel zur Achse (102) der Säule (100) verläuft.

7. Anordnung nach einem der Ansprüche 1 bis 6, dadurch gekennzeichnet, daß die Einrichtung (200) wenigstens eine im wesentlichen senkrecht zur Achse (102) der Säule (100) verlaufende Grundplatte (210) und einen Schaft (220) umfaßt, der axial geschlitzt ist und wenigstens teilweise elastisch ist.

8. Anordnung nach Anspruch 7, dadurch gekennzeichnet, daß der geschlitzte Schaft (220) wenigstens einen festen Sektor (221), der zur Anlage an der Säule (100) dient, und wenigstens einen elastischen Sektor (222, 223, 224) umfaßt.

9. Anordnung nach einem der Ansprüche 1 bis 8, dadurch gekennzeichnet, daß die Grundplatte (210) der Einrichtung (200) eine Bohrung (234) aufweist, die so ausgebildet ist, daß sie den Schaft einer Einstellschraube (500) zur Ineingriffnahme mit dem Keil (400) aufnimmt.

10. Anordnung nach Anspruch 9, dadurch gekennzeichnet, daß die Bohrung (234) langgestreckt ist, wobei ihre größere Abmessung radial bezüglich der Achse (102) der Säule (100) gerichtet ist.

11. Anordnung nach einem der Ansprüche 1 bis 10, dadurch gekennzeichnet, daß die Konstruktion (230), die an der Einrichtung vorgesehen ist, eine Anlagefläche (235) aufweist, die bezüglich der Achse (102) der Säule (100) schräg verläuft und von zwei seitlichen Wänden (240, 242) eingerahmt wird.

12. Anordnung nach einem der Ansprüche 1 bis 11, dadurch gekennzeichnet, daß die Neigung (β) der Schrägfläche (235) zum Festziehen, die an der Konstruktion vorgesehen ist, die mit der Einrichtung verbunden ist, in der Größenordnung von 10 bis 15° liegt.

13. Anordnung nach einem der Ansprüche 1 bis 12, dadurch gekennzeichnet, daß die Konstruktion (230), die an der Einrichtung (200) vorgesehen ist, einen mittleren Steg (236) umfaßt, der bezüglich der Achse (102) der Säule schräg verläuft und von zwei Hohlkehlen (237, 238) eingerahmt ist, die so ausgebildet sind, daß sie Stege (433, 443) aufnehmen, die am Keil (400) vorgesehen sind.

14. Anordnung nach einem der Ansprüche 1 bis 12, dadurch gekennzeichnet, daß die Konstruktion (230), die an der Einrichtung (200) vorgesehen ist, eine mittlere Hohlkehle aufweist, die so ausgebildet ist, daß sie einen Steg aufnimmt, der am Keil (400) vorgesehen ist, und die von zwei Stegen eingerahmt ist, die bezüglich der Achse (102) der Säule (100) schräg verlaufen und zur Anlage am Keil (400) bestimmt sind.

15. Anordnung nach einem der Ansprüche 1 bis 14, dadurch gekennzeichnet, daß die Einrichtung elastische Zähne (229) umfaßt, die zur Sicherung des Haltes der Schelle (300) ausgebildet sind.

16. Anordnung nach einem der Ansprüche 1 bis 15, dadurch gekennzeichnet, daß der Keil (400) eine Form im wesentlichen einer Pyramide hat.

17. Anordnung nach einem der Ansprüche 1 bis 16, dadurch gekennzeichnet, daß der Keil (400) zwei Symmetrieebenen (PO) hat.

18. Anordnung nach einem der Ansprüche 1 bis 17, dadurch gekennzeichnet, daß der Keil (400) einen mittleren mit einem Gewinde versehenen Schaft (410) aufweist.

19. Anordnung nach einem der Ansprüche 1 bis 18, dadurch gekennzeichnet, daß der Keil (400) zwei ebene parallele Hauptflächen (420, 422) umfaßt, die eine Blockierung gegenüber einer Drehung des Keiles (400) sicherstellen.

20. Anordnung nach einem der Ansprüche 1 bis 19, dadurch gekennzeichnet, daß der Keil (400) zwei Stege (433, 443) an gegenüberliegenden Flächen (430, 440) umfaßt, welche Stege (433, 443) die Anlagefacetten (434, 444) für die Schelle (300) parallel zur Achse (102) bilden und die Facetten (432, 442) einrahmen, die bezüglich dieser Achse schräg verlaufen.

21. Anordnung nach einem der Ansprüche 1 bis 19, dadurch gekennzeichnet, daß der Keil (400) an seinen gegenüberliegenden Flächen (430, 440) einen mittleren Steg aufweist, der eine Anlagefacette parallel zur Achse (102) für die Schelle (300) bildet und von Hohlkehlen eingerahmt ist, deren Boden schräg bezüglich dieser Achse (102) verläuft.

22. Anordnung nach Anspruch 20 oder 21, dadurch gekennzeichnet, daß die Kopfhöhe (h) der Stege (433, 443) kleiner als die Tiefe der entsprechenden Hohlkehlen (237, 238) ist, die an der Konstruktion (230) vorgesehen sind, die mit der Einrichtung verbunden ist.

## Claims

1. A system for fixing an assembly (200) on a column (100), in particular for fixing an electric switch support plate on a motor vehicle steering column, the system being of the type comprising a wedge (400) and a collar (300) adapted to surround the column (100), the system being characterized by the fact that it comprises a structure (230) that is tied to the assembly (200), that is placed inside the collar (300), and that surrounds the column (100) at least in part, while the wedge (400) is designed to be placed between the collar (300) and the structure (230). thereby displacing the collar radially relative to the axis (102) of the column (100) to clamp the collar (300) and the assembly (200) relative to the column (100) when the wedge (400) is itself moved in a direction that is generally parallel to the axis (102) of the column (100).

2. A system according to claim 1, characterized by the fact that the faces (430, 440) of the wedge (400) resting against the collar (300) and against the structure (230) of the assembly are symmetrical, such that said faces (430. 440) can be interchanged.

3. A system according to claim 1 or 2, characterized by the fact that the structure (230) tied to the assembly (200) defines a guide for guiding the wedge (400) in translation.

4. A system according to any one of claims 1 to 3, characterized by the fact that the structure (230) tied to the assembly (200) defines a ramp (235) that is inclined relative to the axis (102) of the column to act against the wedge (400).

5. A system according to any one of claims 1 to 4, characterized by the fact that the wedge (400) defines at least one facet (432, 442) serving to bear against a ramp (235) tied to the structure (230) of the assembly (200) and inclined relative to the axis (102) of the column.

6. A system according to any one of claims 1 to 5, characterized by the fact that the wedge (400) defines at least one facet (432, 442) serving to bear against the collar (300) which is parallel to the axis (102) of the column (100).

7. A system according to any one of claims 1 to 6, characterized by the fact that the assembly (200) comprises at least one plate (210) that is generally perpendicular to the axis (102) of the column (100) and a drum (220) that is split axially and that is resilient, at least in part.

8. A system according to claim 7, characterized by the fact that the split drum (220) comprises at least one rigid sector (221) serving to bear against the column (100), and at least one resilient sector (222, 223, 224).

9. A system according to any one of claims 1 to 8, characterized by the fact that the plate (210) of the assembly (200) includes a hole (234) designed to receive the shank of a control screw (500) engaged with the wedge (400).

10. A system according to claim 9, characterized by the fact that the hole (234) is oblong, having its long direction extending radially relative to the axis (102) of the column (100).

11. A system according to any one of claims 1 to 10, characterized by the fact that the structure (230) provided on the assembly comprises a bearing face (235) that is inclined relative to the axis (102) of the column (100) and that is disposed between two small side walls (240 242).

12. A system according to any one of claims 1 to 11, characterized by the fact that the angle of inclination (β) of the drive ramp (235) provided on the structure tied to the assembly is about 10° to about 15°.

13. A system according to any one of-claims 1 to 12, characterized by the fact that the structure (230) provided on the assembly (200) comprises a central rib (236) that is inclined relative to the axis (102) of the column, and that lies between two grooves (237, 238) designed to receive ribs (433, 443) provided on the wedge (400).

14. A system according to any one of claims 1 to 12, characterized by the fact that the structure (230) provided on the assembly (200) includes a central groove designed to receive a rib provided on the wedge (400) and located between two ribs that are inclined relative to the axis (102) of the column (100) and that are designed to bear against the wedge (400).

15. A system according to any one of claims 1 to 14, characterized by the fact that the assembly comprises resilient sets of teeth (229) designed to hold the collar (300).

16. A system according to any one of claims 1 to 15, characterized by the fact that the wedge (400) is generally pyramid-shaped.

17. A system according to any one of claims 1 to 16, characterized by the fact that the wedge (400) has two planes of symmetry (P, O).

18. A system according to any one of claims 1 to 17, characterized by the fact that the wedge (400) comprises a tapped central drum (410).

19. A system according to any one of claims 1 to 18, characterized by the fact that the wedge (400) comprises two parallel plane main faces (420, 422) which prevent the wedge (400) from rotating.

20. A system according to any one of claims 1 to 19. characterized by the fact that the wedge (400) comprises two ribs (433, 443) on opposite faces (430, 440), which ribs (433, 443) define bearing facets (434, 444) for the collar (300) extending parallel to the axis (102) and on either side of the facets (432. 442) that are inclined relative to said axis.

21. A system according to any one of claims 1 to 19, characterized by the fact that the wedge (400) possesses respective central ribs on opposite faces (430, 440) defining bearing facets parallel to the axis (102), for engaging the collar (300), and disposed between grooves whose bottoms are inclined relative to said axis (102).

22. A system according to claim 20 or 21, characterized by the fact that the ribs (433, 443) project by a height (h) which is smaller than the depth of the corresponding grooves (237, 238) provided on the structure (230) tied to the assembly.
